(19) Europäisches Patentamt
European Patent Office
Office européen des brevets

(11) Veröffentlichungsnummer : **0 500 495 A2**

(12) **EUROPÄISCHE PATENTANMELDUNG**

(21) Anmeldenummer : **92810099.9**

(22) Anmeldetag : **12.02.92**

(51) Int. Cl.$^5$ : **C08G 18/80,** C08G 18/32, C08G 18/50, C09J 175/04

(30) Priorität : **21.02.91 CH 526/91**

(43) Veröffentlichungstag der Anmeldung : **26.08.92 Patentblatt 92/35**

(84) Benannte Vertragsstaaten : **CH DE ES FR GB IT LI NL SE**

(71) Anmelder : **CIBA-GEIGY AG
Klybeckstrasse 141
CH-4002 Basel (CH)**

(72) Erfinder : **Mühlebach, Andreas, Dr.
Les Grands Esserts 7
CH-1782 Belfaux (CH)**
Erfinder : **Gruber, Erich, Prof. Dr.
Rte de l'Union 4
CH-1723 Marly (CH)**

(54) **Warmhärtende Zusammensetzung.**

(57) Die Erfindung betrifft eine warmhärtende Zusammensetzung, die zumindest ein blockiertes Polyisocyanat der Formeln I oder II

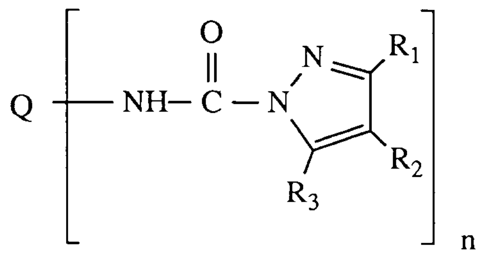 (I), 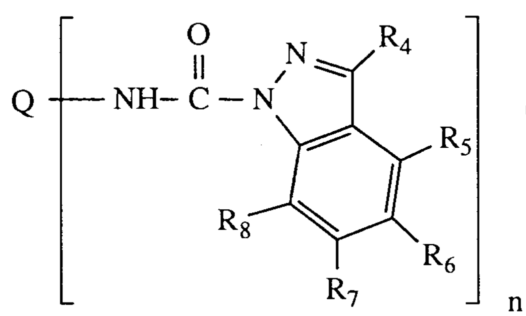 (II),

worin
n eine ganze Zahl ≧ 2 bedeutet,
Q einen n-wertigen organischen Rest bedeutet, und
$R_1$, $R_2$, $R_3$, $R_4$, $R_5$, $R_6$, $R_7$, $R_6$ unabhängig voneinander Wasserstoff, Alkyl-, Aryl-, Arylalkyl-, Alkyloxy-, Alkylthio oder Hydroxyl bedeuten, und
ein zur Vernetzung fähiges, bei Raumtemperatur flüssiges, primäres oder sekundäres Polyamin, enthält,
wobei das blockierte Polyisocyanat in dem Polyamin bei Raumtemperatur oder mässig erhöhter Temperatur im wesentlichen nicht löslich ist.

Die Zusammensetzungen weisen eine besonders hohe Reaktivität bei gleichzeitig guter Lagerstabilität auf. Eine wichtige Ausführungsform bilden die Zusammensetzungen, bei denen das blockierte Isocyanat in dem Polyamin bei der Lagerungstemperatur im wesentlichen nicht löslich ist. Die erfindungsgemässen Zusammensetzungen eignen sich besonders zum Verkleben von Kunststoffen und Metallen.

EP 0 500 495 A2

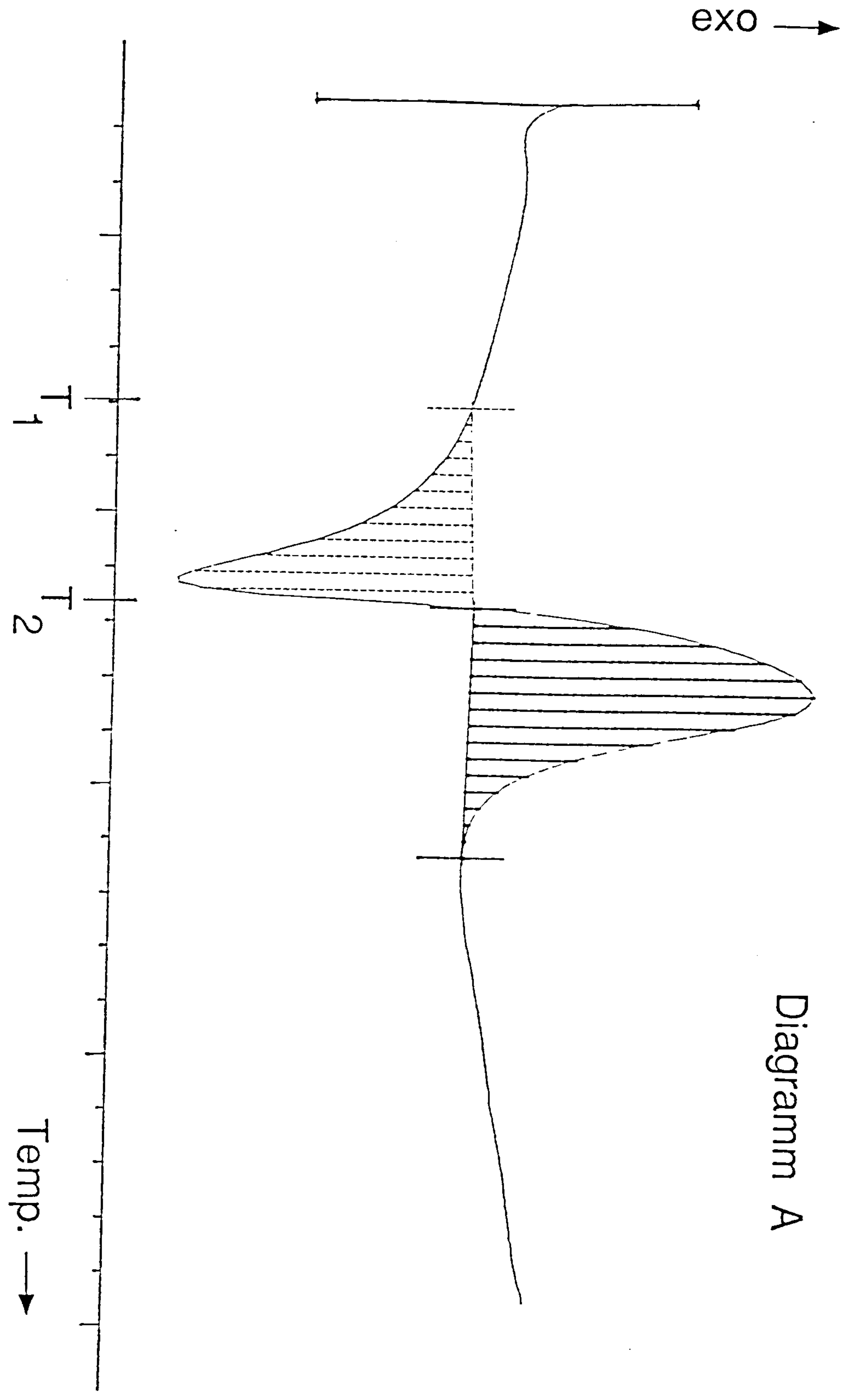


Fig. 1

Die Erfindung betrifft eine warmhärtende Zusammensetzung, die mindestens ein Polyisocyanat, dessen Isocyanatgruppen mit Pyrazol- oder Indazolderivaten blockiert sind, und ein bei Raumtemperatur flüssiges Polyamin als Härter enthält, die Verwendung solcher Polyamine als thermische Härter für pyrazol- und indazolblockierte Polyisocyanate und Anwendungen solcher Zusammensetzungen zum Kleben.

Die Blockierung von Polyisocyanaten mit vielfältigen Blockierungsmitteln, z. B. mit Phenolen, aber auch mit Pyrazolen, ist bekannt. Durch die Umsetzung der Polyisocyanate mit dem Blockierungsmittel wird eine Reaktion der Isocyanatgruppen mit aktive (bewegliche) Wasserstoffatome aufweisenden Verbindungen als Härter (bzw. Vernetzungsmittel), mit denen die reinen Isocyanate bereits bei sehr niedrigen Temperaturen unter Vernetzung reagieren, erst bei erhöhter Temperatur ermöglicht. Man kann daher blockierte Isocyanate bei Raumtemperatur mit den Vernetzungsmitteln mischen und die Gemische gewisse Zeit handhaben und lagern. Zur Aushärtung werden die Gemische auf eine Temperatur erhitzt, bei der nunmehr auch die blockierten Polyisocyanate mit den Härtern reagieren. Als geeignete Härter sind bereits viele Verbindungstypen beschrieben worden, z. B. Polyalkohole, Polyamine, Polythiole, Polycarbonsäuren, Tri- oder Diamide, Urethane oder Wasser.

Die US-A-4,976,837 beschreibt die Blockierung von Polyisocyanaten mit Pyrazolderivaten. Als Vorteil der so blockierten Isocyanate wird angegeben, dass diese bei relativ niedrigen Temperaturen reaktionsfähiges Polyisocyanat bilden und trotzdem bei Raumtemperatur gegenüber aktive Wasserstoffatome aufweisenden Verbindungen als Härter stabil seien. Weiterhin wird der Einsatz solcher Gemische als Bestandteil von elektrophoretisch abscheidbaren Farben beschrieben. Hierfür werden Polyamidpolyaminharze, beispielsweise die Umsetzungsprodukte von dimeren Fettsäuren mit aliphatischen Polyaminen, als geeignete Härter angeführt.

Aus der US-A-4,797,494 ist auch schon bekannt, Gemische aus Polyalkoholen und bestimmten Polyisocyanaten, die durch Umsetzung mit 3-Methylpyrazol blockiert sind, zum Kleben zu benutzen. Die beschriebenen Gemische härten bereits bei Temperaturen im Bereich von 120°C und lassen somit die Herstellung von Klebeverbindungen bei diesen relativ niedrigen Temperaturen zu. Weiterhin ist beschrieben, dass die Gemische bei Raumtemperatur längere Zeit stabil sind. Nachteilig bei diesen Polyole enthaltenden Gemischen ist jedoch, dass die Gelierzeit, insbesondere bei Temperaturen von 100 - 120°C, sehr lang ist.

Die Aufgabe der vorliegenden Erfindung ist, eine warmhärtende Zusammensetzung auf Basis blockierter Polyisocyanate zu Verfügung zu stellen, die ein verbessertes Stabilitäts-/Reaktivitätsverhältnis aufweist, d. h. sowohl lange Lagerstabilität bei Umgebungstemperatur als auch geringe Gelierzeiten bzw. Härtungsdauer unterhalb 160 °C, insbesondere bei Temperaturen von 100 - 120°C.

Die Erfindung betrifft daher eine warmhärtende Zusammensetzung, die mindestens ein blockiertes Polyisocyanat der Formeln I oder II

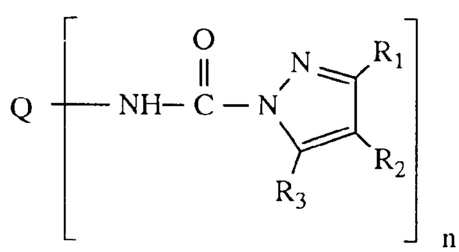 (I), 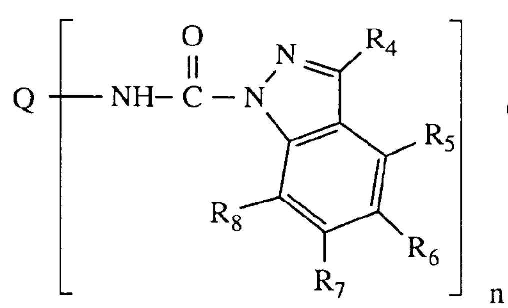 (II),

worin

n eine ganze Zahl ≧ 2 bedeutet,

Q einen n-wertigen organischen Rest bedeutet, und

$R_1$, $R_2$, $R_3$, $R_4$, $R_5$, $R_6$, $R_7$, $R_5$ unabhängig voneinander Wasserstoff, Alkyl-, Aryl-, Arylalkyl-, Alkyloxy-, Alkylthio oder Hydroxyl bedeuten, und

ein zur Vernetzung fähiges, bei Raumtemperatur flüssiges, primäres oder sekundäres Polyamin, enthält, wobei das blockierte Polyisocyanat in dem Polyamin bei Raumtemperatur oder mässig erhöhter Temperatur im wesentlichen nicht löslich ist.

Mit dem Begriff "Raumtemperatur" ist hier eine Temperatur im Bereich von etwa 10 °C bis etwa 30 °C gemeint.

Die eingesetzten blockierten Polyisocyanate müssen zumindest zwei mit Pyrazolen oder Indazolen blokkierte Isocyanatgruppen pro Molekül aufweisen, sie können aber auch drei oder noch mehr solcher Isocyanatgruppen aufweisen. Entsprechend stellt die Gruppe Q in den Formeln I und II einen zumindest zweiwertigen organischen Rest dar. Nach oben hin kann n zwar prinzipiell beliebig gross sein, bevorzugt liegt n aber im Bereich von 2 bis 5. Bei der Gruppe Q es kann sich z. B. um einen aliphatischen, cycloaliphatischen, aromatischen oder gemischt aliphatischaromatischen Rest handeln.

Die Verbindungen der Formeln I und II sind im allgemeinen zumindest bei Raumtemperatur fest. Manche können aber auch hochvikos oder pastenartig sein, insbesondere wenn sie noch einen relativ hohen Verunreinigungsgrad aufweisen. Bevorzugt sind Verbindungen der Formeln I und II, die zumindest bei Raumtemperatur fest sind, insbesondere solche mit Schmelzpunkten oberhalb etwa 80 °C.

Als Basis für die blockierten Polyisocyanate in den erfindungsgemässen Zusammensetzungen sind alle zur Vernetzung fähigen Polyisocyanate geeignet, z. B. Hexamethylendiisocyanat (HDI), Trimethylhexamethylendiisocyanat (TMDI), Cyclohexandiisocyanat (CHDI), Isophorondiisocyanat (3,5,5-Trimethyl-1-isocyanato-3-iscyanatomethylcyclohexan; IPDI), Methylendicyclohexylisocyanat (HMDI), p-Phenylendiisocyanat (PPDI), Diisocyanatotoluol (TDI), z. B. 2,4-Diisocyanatotoluol, 2,6 Diisocyanatotoluol und technische Gemische von beiden Isomeren, Naphthylendiisocyanat (NDI), insbesondere 1,5-Naphthylendiisocyanat, Dianisidindiisocyanat (DADI), Methylendiphenyldiisocyanat (MID), insbesondere das 4,4′-Isomere, aber auch technische Gemische verschiedener Isomere, beispielsweise der 4,4′- und 2,4′-Isomeren, oder Polymethylenpolyphenylisocyanate (PAPI). Ebenfalls gut geeignet sind auch Polyisocyanate, die durch Umsetzung von Polyisocyanaten mit sich selbst über Isocyanatgruppen erhältlich sind, wie Uretdione oder Carbodiimidverbindungen, die durch Reaktion zweier Isocyanatgruppen entstehen, oder wie Isocyanurat- oder Biuretverbindungen, die durch Reaktion dreier Isocyanatgruppen entstehen. Für die Erfindung geeignet sind auch Polyisocyanatpräpolymere, die durchschnittlich mehr als eine Isocyanatgruppe pro Molekül aufweisen und durch Vorreaktion eines molaren Überschusses beispielsweise eines der oben genannten Polyisocyanate mit einem organischen Material erhalten werden, das mindestens zwei aktive Wasserstoffatome pro Molekül aufweist, z. B. in Form von Hydroxylgruppen wie bei Polyalkylenglykolen. Isocyanate wie die genannten sind allgemein verfügbar und in grosser Vielfalt kommerziell erhältlich.

Bevorzugt werden als Polyisocyanate Methylendiphenyldiisocyanat (MDI), insbesondere aber Isophorondiisocyanat (IPDI) und ganz besonders Hexamethylendiisocyanat (HDI), das Isocyanurat von Hexamethylendiisocyanat und das Biuret von Hexamethylendiisocyanat.

Die freien Isocyanatgruppen der Basispolyisocyanate können entweder mit Pyrazolderivaten oder mit Indazolderivaten umgesetzt sein. Im erstgenannten Fall liegen blockierte Polyisocyanate der Formel I vor, im zweitgenannten solche der Formel II.

Bevorzugt enthalten erfindungsgemässe Zusammensetzungen jedoch mit Pyrazolen blockierte Polyisocyanate der Formel I, da Pyrazole leichter zugänglich sind und die Härtung dieser Zusammensetzungen im allgemeinen bei niedrigerer Temperatur möglich ist, die Zusammensetzungen also bei niedrigerer Temperatur zu gelieren beginnen.

Sowohl die Pyrazolylschutzgruppe als auch die Indazolylschutzgruppe können unsubstituiert sein. $R_1$ bis $R_8$ in den Formeln I und II würden in diesem Falle alle Wasserstoff bedeuten.

Beide Schutzgruppen können aber auch Substituenten aufweisen, die Pyrazolylgruppe im allgemeinsten Fall bis zu 3, die Indazolylgruppe bis zu 5 Substituenten. Aus praktischen Gründen sind in beiden Fällen aber ein bis zwei oder höchstens drei Substituenten bevorzugt.

Als Substituenten bedeuten $R_1$, $R_2$, $R_3$, $R_4$, $R_5$, $R_6$, $R_7$, $R_8$ bevorzugt:

Alkyl, Alkyloxy oder Alkylthio mit einem bis zu fünf Kohlenstoffatomen, wobei wiederum besonders Methyl und Methoxy bevorzugt sind,

Aryl mit bis zu zehn Ringkohlenstoffatomen, insbesondere Phenyl, wobei die Arylreste gegebenfalls ihrerseits Substituenten haben können, z. B. Alkyl- oder Alkyloxysubstituenten,

Arylalkyl, insbesondere Aryl-($C_1$-$C_4$)Alkyl, ganz besonders Arylmethyl, wobei als Arylgruppe z. B. Phenyl, 4-Methoxyphenyl, 4-Toluyl, aber auch heteroaromatische Gruppen, wie 2-Furyl- oder 4-Pyryl, in Frage kommen. Besonders bevorzugt als Arylalkylrest ist Benzyl.

Einer oder mehrere der Reste $R_1$ bis $R_8$ können auch Hydroxylreste sein. Dies kann beispielsweise vorteilhaft sein, weil Hydroxylreste leicht mit Silanhaftvermittlern reagieren, so dass auf diese Weise eine besonders gute Haftung der gehärteten Zusammensetzungen auch auf besonders problematischem Untergrund erreicht werden kann.

Stellen einzelne oder alle Reste $R_1$ bis $R_8$ Substituenten dar, die als Elektronendonator wirken, so wird insbesondere die Reaktivität der blockierten Polyisocyanate gegenüber den Polyaminen gesteigert. Dies gilt ganz besonders, wenn mehrere solche Substituenten vorhanden sind. Eine solchermassen erhöhte Reaktivität der blockierten Polyisocyanate kann von Vorteil sein, weil sie zu niedrigeren Gelier- bzw. Härtungstemperaturen und kürzerer Gelierzeit der erfindungsgemässen Zusammensetzungen beitragen kann. Zur Steigerung der Reaktivität geeignet sind z. B. Alkylreste, etwa Methyl. So ist die Reaktivität eines mit unsubstituiertem Pyrazol blockierten Polyisocyanats gegenüber Polyaminen beispielsweise geringer als die eines mit 3-Methylpyrazol blockierten und dessen Reaktivität wiederum geringer als die eines mit 3,5-Dimethylpyrazol blockierten Isocyanats. Da 3,5-Dimethylpyrazol ausserdem besonders leicht verfügbar ist, stellen Zusammensetzungen mit Polyisocyanaten, die durch Umsetzung mit 3,5-Dimethylpyrazolen blockiert sind, eine besonders günstige Ausführungsform der Erfindung dar.

Die Herstellung von Pyrazol- und Indazolderivaten zur Blockierung der Polyisocyanate ist dem Fachmann bekannt. Viele sind ausserdem kommerziell erhältlich.

Pyrazolderivate sind beispielsweise durch Umsetzung passend gewählter i,i+2-Diketone, z. B. ein 1,3-Diketon, mit Hydrazin mit oder ohne Lösungsmittel (z. B. Toluol) zugänglich, gemäss dem folgenden Schema:

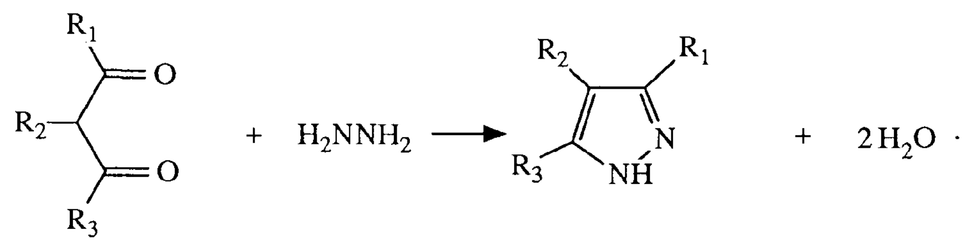

Die Darstellung vieler Pyrazolderivate ist in Beilstein, Band 23, Hauptband, S. 39, Ergänzungsband EI, S. 15, EIII/IV, S. 23 beschrieben. Die Herstellung Alkyloxysubstituente aufweisender Pyrazolderivate kann speziell auch gemäss H. J. Backer und W. Meijer, Rec. d. Traveaux Chim. des Pays-Bas 45 (1926), S. 428 durch Alkylierung von Pyrazolonen erfolgen. Die Einführung von Arylalkylsubstituenten am Pyrazolring ist in manchen Fällen mit Hilfe einer besonders günstigen Eintopfreaktion zur direkten Arylmethylierung von i,i+2-Diketonen (z.B. Acetylaceton) gemäss T. Sakai, K. Miyata, S. Tsuboi und M. Utaka, Bull. Chem. Soc. Jpn. 62 (1989), S. 4072 und nachfolgender Umsetzung mit Hydrazin möglich.

Zur Herstellung von Indazolderivaten wird ebenfalls auf Beilstein, Band 23, Hauptband, S. 122, EI, S. 32, EII, S. 117 und EIII/IV, S. 1055 verwiesen.

Die weitere Herstellung der pyrazol- und indazolblockierten Polyisocyanate kann dann durch quantitative Umsetzung der Pyrazole bzw. Indazole mit den Polyisocyanaten unter Inertgas erfolgen. Vorzugsweise arbeitet man dabei bei erhöhter Temperatur und in einem geeigneten inerten Lösungsmittel (z. B. Toluol), gegebenenfalls in Gegenwart eines Katalysators (z. B. Dibutylzinndilaurat). Infolge der exothermen Reaktion beider Verbindungen kann eine Kühlung erforderlich sein. Weitere Möglichkeiten für solche Umsetzungen sind auch in US-A-4,797,494 oder US-A-4,976,837 beschrieben.

Mit 5-Hydroxypyrazolen blockierte Polyisocyanate sind vorteilhaft auch durch Umsetzung der freien Isocyanate mit 5-Pyrazolonen erhältlich, da diese im Gleichgewicht immer etwas 5-Hydroxypyrazol enthalten (Mitsuhaski, Takanagi, Matsuno, Tanaka, J. Heterocyclic Chem. 19 (1982), S. 1389).

Als zweite obligatorische Komponente enthält die erfindungsgemässe Zusammensetzung ein zur Vernetzung fähiges, bei Raumtemperatur flüssiges, primäres oder sekundäres Polyamin als Härter. Dieses führt infolge der Deblockierung des Polyisocyanats durch Erwärmung der Zusammensetzung zur Vernetzung des Polyisocyanats. "Zur Vernetzung fähig" bedeutet in diesem Zusammenhang, dass das Polyamin zumindest difunktionell sein muss, wenn ein Polyisocyanat mit einer Funktionalität, die grösser als 2 ist, z. B. 2,1 im Mittel, zur Verwendung kommt, aber mehr als difunktionell, wenn nur ein difunktionelles Polyisocyanat eingesetzt wird.

Als Beispiele von geeigneten Polyaminen seien aliphatische Polyamine, z. B. Diethylentriamin oder Triethylentetramin, cycloaliphatische Diamine, wie Cyclohexandiamine, aromatische Diamine, z. B. Methylendianilin, angeführt.

Besonders günstig sind Polyoxyalkylenpolyamine, z. B. Polyoxyethylenamine und ganz besonders Polyoxypropylenpolyamine, für Polyisocyanate mit mehr als zwei Isocyanatgruppen pro Molekül beispielsweise die des folgenden difunktionellen Typs:

$$H_2N \left[ CH_2CH(CH_3)O \right]_m CH_2CH(CH_3)NH_2 \ .$$

In dieser Formel kann m z. B. die Werte 2 oder 3 aufweisen. Die Polyoxyalkylenkette in den genannten Polyaminen kann jedoch auch verzweigt sein und mehr als zwei Aminogruppen im Molekül aufweisen. Gut für Polyisocyanate mit durchschnittlich zwei Isocyanatgruppen pro Molekül geeignet sind z. B. Polyoyxpropylenpolyamine des folgenden (trifunktionellen) Typs:

$$\begin{array}{l} CH_2[CH_2]_x[OCH_2CH(CH_3)]_yNH_2 \\ | \\ CH[CH_2]_x[OCH_2CH(CH_3)]_yNH_2 \\ | \\ CH_2[CH_2]_x[OCH_2CH(CH_3)]_yNH_2 \end{array} .$$

x kann in dieser Formel z. B. 0 oder auch 1 sein, die y-Werte können z. B. 2 oder 3 sein, von Kette zu Kette gegebenenfalls auch differieren. Die Molekulargewichte der Polyoxyalkylenpolyamine liegen bevorzugt unter 500.

Polyoxyalkylenamine, wie im vorhergehenden Abschnitt beschrieben, sind unter der Bezeichnung Jeffamine® auch kommerziell erhältlich. Zusammensetzungen mit Polyoxyalkylenaminen stellen eine besonders wertvolle Ausführungsform der Erfindung dar.

Blockierte Polyisocyanate und Polyamine sind zweckmässig in der Zusammensetzung in einem Verhältnis vorhanden, das gewährleistet, dass Aminwasserstoffatome in einer Menge geliefert werden können, die der 0,5-fachen bis doppelten Menge der Isocyanatgruppen stöchiometrisch äquivalent ist, die die Zusammensetzung zur Verfügung stellen kann. Bevorzugt weisen die Zusammensetzungen ein äquimolares Verhältnis von blockierten Isocyanat- zu Aminogruppen auf. Das stöchiometrische Verhältnis der genannten Gruppen in der Zusammensetzung bestimmt unter anderem den Polymerisationsgrad bei der Härtungsreaktion und die Art der gebildeten Endgruppen. Durch Variation dieses Verhältnisses können z. B. die Reaktivität der Zusammensetzung und ihre mechanischen Eigenschaften nach der Härtung gesteuert werden.

Zusätzlich zu den genannten Komponenten können erfindungsgemässe Zusammensetzungen übliche weitere Bestandteile in den üblicherweise eingesetzten Mengen enthalten, z. B. Viskositätsregler, Saeckmittel, Füllstoffe, Verstärkungsmittel, Metallpartikel, Pigmente, Farbstoffe, Weichmacher, Haftvermittler, Fungizide, Antioxidantien, Verlaufsmittel, Verdünner, z. B. Reaktivverdünner, wie Epoxidharze, und dergleichen mehr.

Die erfindungsgemässen Zusammensetzungen können für alle Anwendungen verwendet werden, wo warmhärtende Zusammensetzungen auf Basis blockierter Polyisocyanate gewöhnlich eingesetzt werden, z. B. als Farbe bzw. Basis einer Farbe, als Dichtmasse oder als Klebstoff. Die Härtung kann dabei durch Zufuhr von Wärme in jeglicher Form erfolgen. Sie kann beispielsweise auch mit Hilfe von Mikrowellen oder durch Induktionserwärmung durchgeführt werden, wobei für letzteres die Zusammensetzungen selbstverständlich elektrisch leitende Partikel, z. B. Metallpartikel, enthalten müssen.

Erfindungsgemässe Zusammensetzungen sind sehr reaktiv. Die Gelier- bzw. Härtungszeiten der Zusammensetzungen liegen im allgemeinen auch bei einer Temperatur von 100 - 120 °C unter 20 Minuten, vielfach aber im Bereich von wenigen Sekunden bis zu 5 Minuten. Bei diesen Temperaturen benötigen z. B. entsprechende Zusammensetzungen, die Polyole als Härter enthalten, im allgemeinen Gelierzeiten von einer Stunde und mehr.

Zudem weisen die beschriebenen Zusammensetzungen ein ausgezeichnetes Stabilitäts-/Reaktivitätsverhältnis auf, obwohl diese beiden Eigenschaften normalerweise in Widerspruch zueinander stehen. Uni nämlich eine lange Lagerstabilität zu erreichen, ist es günstig, dem blockierten Isocyanat ein möglichst wenig reaktives Vernetzungs- oder Härtungsmittel zuzusetzen. Wenig reaktive Vernetzungsmittel, zu denen z. B. die Polyole gehören, führen aber, wie bereits dargelegt wurde, zu langen Gelierzeiten. Die erfindungsgemässen Zusammensetzungen lassen sich jedoch bei Raumtemperatur oder auch bei mässig erhöhter Temperatur ohne weiteres mehrere Monate lang lagern, ohne dass ihre Viskosität nennenswert ansteigt. Sie weisen daher, bei um vielfaches erhöhter Reaktivität, eine Stabilität auf, die zumindest der herkömmlicher Zusammensetzungen, basierend auf blockierten Isocyanaten, entspricht und diese in manchen Fällen übertrifft.

Da die erfindungsgemässen Zusammensetzungen bei Temperaturen gelagert bzw. während der Topfzeit (vor der Härtung) gehandhabt werden sollten, bei denen das blockierte Isocyanat in dem verwendeten Polyamin im wesentlichen noch nicht löslich ist, sollte die Temperatur, unterhalb derer noch keine Lösung eintritt, bevorzugt möglichst hoch liegen. Obwohl auch Zusammensetzungen, wo diese Temperatur z. B. bei 20 bis 40 °C liegt, schon eine Stabilität zeigen, die in vielen Fällen ausreichend ist, sind solche Zusammensetzungen besonders bevorzugt, bei denen das blockierte Isocyanat im Polyamin bei einer Temperatur bis zu 50°C, noch besser bis zu 80°C, im wesentlichen nicht löslich ist und die somit auch entsprechend höhere Lagerungs- und Topftemperaturen verkraften. Zu diesen Zusammensetzungen gehören z. B. die, die pyrazolblockierte Polyisocyanate auf Basis von Polymethylendiisocyanaten, insbesondere 1,6-Hexamethylendiisocyanaten, und Polyoxypropylenpolyaminen enthalten.

Das Vorliegen von Löslichkeitsverhältnissen wie den geschilderten kann beispielsweise durch einfache Beobachtung festgestellt werden. So bildet beispielsweise pyrazolblockiertes 1,6-Hexamethylendiisocyanat bei Raumtemperatur oder leicht erhöhter Temperatur mit Polyoxypropylenpolyaminen eine trübe aussehende

Suspension, während sich beim Erhitzen über 100 - 105°C eine klare, transparente Lösung beider Komponenten bildet, bevor die Masse anschliessend geliert.

Besonders bevorzugt sind erfindungsgemässe Zusammensetzungen, bei denen sich das blockierte Polyisocyanat im Polyamin endotherm löst. Dies kann in einfacher Weise z. B. durch Differentialthermoanalyse festgestellt werden. Das beim Erhitzen einer solchen Probe ausgehend von Raumtemperatur erhaltene Diagramm zeigt nämlich zunächst einen endothermen Peak aufgrund des endothermen Lösungsvorgangs des blockierten Polyisocyanats im Polyamin, auf den ein weiterer Peak folgt, der von der exothermen Härtungsreaktion des blockierten Polyisocyanats mit dem Polyamin hervorgerufen wird. Figur 1 zeigt das prinzipielle Aussehen eines solchen Diagramms, wie es mit Hilfe eines Differential Scanning Calorimeters erhalten werden kann. Bei der Temperatur $T_1$ setzt die Lösung des blockierten Polyisocyanats ein, bei der Temperatur $T_2$ ist der Lösevorgang abgeschlossen, und die Härtung beginnt. Unterhalb der Temperatur $T_1$ ist das blockierte Polyisocyanat in dem Polyamin im wesentlichen nicht löslich.

Den Zusammensetzungen kann auch ein zusätzliches Mittel zugegeben werden, das die Löslichkeit des blockierten Isocyanats herabsetzt. Auf diese Weise kann eine weitere Steigerung der Stabilitäts-/Reaktivitätsverhältnisses der erfindungsgemässen Zusammensetzungen erreicht werden. Sogar in Fällen, in denen das blockierte Polyisocyanat normalerweise in dem verwendeten Polyamin löslich wäre, kann auf diese Weise eine für die Erfindung ausreichende Schwerlöslichkeit des Polyisocyanats im Polyamin und damit eine genügende Stabilität vor der Härtung erreicht werden. Erfindungsgemässe Zusammensetzungen, die ein solches Mittel enthalten, gehören daher ebenfalls zum Gegenstand der vorliegenden Erfindung.

Als Mittel zur Verringering der Löslichkeit von pyrazol- oder indazolblockierten Polyisocyanaten in Polyaminen kommen z. B. Substanzen in Frage, die die Polarität (Hydrophilie) des Mediums steigern, das die blokkierten Isocyanate in der nicht gehärteten Zusammensetzung umgibt. Die Löslichkeit der relativ hydrophoben blockierten Polyisocyanate ist nämlich in einem stärker polaren Medium schlechter, die Lagerstabilität dieser Zusammensetzungen also höher.

Zur Steigerung der Polarität können insbesondere Verbindungen verwendet werden, die eine oder mehrere Hydroxylgruppen enthalten. Viele Polyamine, z. B. die Polyoxyalkylenpolyamine, sind mit solchen Verbindungen in weiten Grenzen mischbar. Beispiele für geeignete Hydroxylgruppen enthaltende Verbindungen sind Glycole, wie z. B. Glycerin. Aber auch Wasser kann prinzipiell verwendet werden. Hierin liegt einer der Gründe, warum erfindungsgemässe Zusammensetzungen auch gut im offenen Gebinde für längere Zeit gelagert werden können, da nämlich ihre Lagerstabilität durch eine Feuchtigkeitsaufnahme noch gesteigert wird. Dies trifft insbesondere für Polyoxyalkylenpolyamine enthaltende Zusammensetzungen zu.

Die Hydroxylverbindungen können in den Zusammensetzungen z. B. in einer Menge von bis zu 50 Gew.-%, bezogen auf das Polyamin, enthalten sein. Da Amine wesentlich schneller mit Isocyanaten reagieren als Hydroxylverbindungen, stören bei der Härtungreaktion gewöhnlich auch grössere Mengen dieser Zusätze nicht, sie führen im allgemeinen aber auch zu keiner weiteren Steigerung der Stabilität mehr. Die Zusätze von Hydroxylverbindungen können zusätzlich einen Weichmachereffekt haben.

Hydroxylverbindungen, die bei den zur Härtung angewandten Temperaturen noch nicht übermässig flüchtig sind, haben den Vorteil, dass bei der Härtung kaum Gasblasen entstehen können, die die Einheitlichkeit der gehärteten Masse stören könnten. Unter anderem aus diesem Grund wird Glycerin als löslichkeitssenkender Zusatz für die blockierten Isocyanate in den erfindungsgemässen Zusammensetzungen besonders bevorzugt. Es wird günstigerweise in einer Menge von 10 - 20 Gew.-%, bezogen auf das Polyamin, zugesetzt. Glycerin hat eine Weichmacherwirkung auf die gehärteten Massen, was weiterhin von Vorteil sein kann.

Obwohl die erfindungsgemässen Zusammensetzungen aufgrund ihrer Langzeitstabiltät insbesondere als Einkomponentenzusammensetzungen geeignet sind, ist es auch möglich, beide wesentlichen Komponenten der Zusammensetzungen zunächst getrennt zu lagern und erst kurz vor der (ersten) Anwendung zu mischen, d. h. sie im Sinne einer Zweikomponentenmischung zu verwenden. Eine solche Zweikomponentenmischung zeichnet sich durch eine lange, praktisch unbeschränkte Topfzeit aus.

Die Erfindung betrifft auch die Verwendung von zur Vernetzung fähigen, bei Raumtemperatur flüssigen, primären oder sekundären Polaminen als thermische Härter für blockierte Polyisocyanate der Formeln I oder II

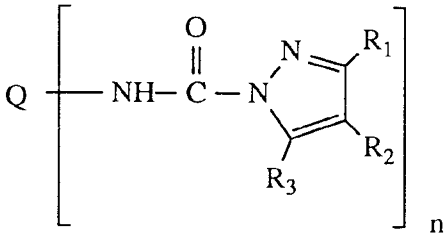 (I), 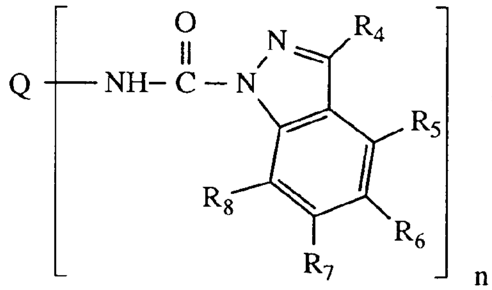 (II),

worin
n eine ganze Zahl ≧ 2 bedeutet,
Q einen n-wertigen organischen Rest bedeutet, und
$R_1$, $R_2$, $R_3$, $R_4$, $R_5$, $R_6$, $R_7$, $R_8$ unabhängig voneinander Wasserstoff, Alkyl-, Aryl-, Arylalkyl-, Alkyloxy-, Alkylthio- oder Hydroxyl bedeuten,
unter der Voraussetzung, dass sich die blockierten Polyisocyanate zumindest bei Raumtemperatur im wesentlichen nicht in den Polyaminen lösen.

Die Erfindung betrifft weiterhin die Verwendung von mindestens einem blockierten Polyisocyanat der oben beschriebenen Formeln I oder II zusammen mit mindestens einem zur Vernetzung von Polyisocyanaten fähigen, bei Raumtemperatur flüssigen, primären oder sekundären Polyamin, in dem das blockierte Polyisocyanat zumindest bei Raumtemperatur im wesentlichen nicht löslich ist, als Klebstoffsystem. Diese Klebstoffsysteme weisen eine besonders gute Klebefestigkeit und Zugscherfestigkeit auf.

Infolge ihrer guten Lagerstabilität sind die erfindungsgemässen Zusammensetzungen besonders als warmhärtender Einkomponentenklebstoff verwendbar.

Eine besonders gute Klebefestigkeit weisen dabei die erfindungsgemässen Zusammensetzungen auf, die blockierte Polyisocyanate enthalten, bei denen Q in den Formeln I oder II ausgewählt ist aus den organischen Resten der Formeln III bis VII:

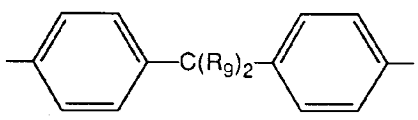 (III), 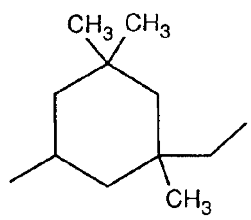 (IV),

$-(CH_2)_6-$ (V), 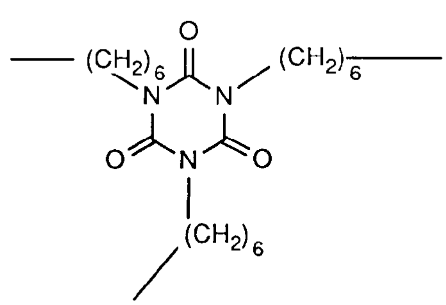 (VI),

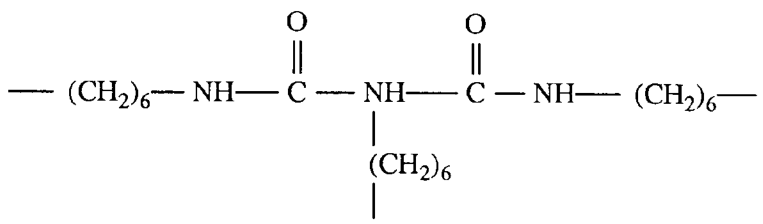 (VII),

wobei die $R_9$ in Formel III unabhängig voneinander Wasserstoff oder Alkyl mit 1 bis 4 Kohlenstoffatomen bedeuten, jedoch bevorzugt Wasserstoff oder Methyl. Die genannten Zusammensetzungen zeigen insbesondere herausragende Werte für die Zugscherfestigkeit.

Klebstoffzusammensetzungen gemäss der Erfindung ermöglichen die Verklebung unterschiedlichster Substrate, z. B. Holz, Metalle, Glas und aller Arten von Kunststoffen. Da die verwendeten Polyamine flüssig sind, lassen sich die erfindungsgemässen Zusammensetzungen im allgemeinen auch einfach und gut applizieren. Die Klebestellen weisen eine hervorragende Haltbarkeit und mechanische Belastbarkeit auf. Die Erfindung betrifft daher auch ein Verfahren zum Verkleben lasttragender Teile unter Verwendung einer warmhärtenden Zusammensetzung, wie sie oben beschrieben wurde.

Insbesondere sonst nur schwer verklebbare Kunststoffe wie Polyvinylchloride, Polycarbonate (PC), Acrylnitril-Butadien-Styrol-Copolymerisate (ABS), Polyamide (PA), Harzmatten, Prepregs oder sogenannte sheet moulding compounds (SMC) können mit den erfindungsgemässen Zusammensetzungen sowohl untereinander als auch mit Metallen gut verklebt werden, so dass die Verwendung der erfindungsgemässen Zusammensetzungen zum Verkleben von Kunststoffen besonders bevorzugt ist. Sehr gut als lagerstabiler, heisshärtender Klebstoff für Kunststoffe geeignet ist z. B. eine Zusammensetzung aus mit 3,5-Dimethylpyrazol blockiertem 1,6-Hexamethylendiisocyanat, Polyoxypropylentriamin (besonders Jeffamine® T 403) und gegebenenfalls einem Haftvermittler und Füllstoffen als Zusatz.

Ein besonderer Vorteil der Klebstoffsysteme auf Basis von pyrazolblockierten Polyisocyanaten ist ausserdem, dass die bei der Härtung abgespaltenen Pyrazolderivate als ("in situ"-) Primer wirken, besonders auf verunreinigten Obeflächen, ganz besonders auf Metalloberflächen, wie auf öligem Stahl. Eine Reinigung oder Entölung der zu klebenden Oberflächen ist daher in diesen Fällen oftmals völlig unnötig, da die Festigkeiten der Klebeverbindungen, wenn beispielsweise nicht entölter Stahl geklebt wird, bei Verwendung der genannten Zusammensetzungen als Klebstoff etwa doppelt so hoch wie die anderer Polyisocyanatkleber.

Beispiel 1: Synthese von mit Pyrazol blockiertem Hexamethylendiisocyanat

In einem 750 ml-Sulfierkolben mit Thermometer, Rückflusskühler, mechanischem Rührer und Inertgasanschluss werden 300 ml Toluol vorgelegt. Man gibt 56,7 g (0,833 Mol) Pyrazol und 0,057 g Dibutylzinndilaurat (DBTL-Katalysator) zu und rührt die Suspension 5 Minuten lang bei 25 °C. Anschliessend werden 70 g (0,4165 Mol) Hexamethylendiisocyanat, gelöst in 200 ml Toluol, unter Stickstoffatmosphäre langsam zugetropft. Bei der exothermen Reaktion bildet sich eine weiss aussehende Suspension. Diese wird 4 Stunden lang unter Rückfluss erhitzt (ca. 110 °C), wobei eine homogene Lösung entsteht, in der kein freies Isocyanat mehr nachweisbar ist. Man kühlt auf 10 °C ab, wobei das pyrazolblockierte Hexamethylendiisocyanat kristallisiert, so dass es abfiltriert werden kann. Nach Trocknung über Nacht bei 50 °C im Hochvakuum werden 124,30 g des Produktes (98,1% Ausbeute) erhalten.

Schmelzpunkt: 135 °C (DSC)

| | | | | |
|---|---|---|---|---|
| Elementaranalyse: | ber. | C 68,26% | H 9,00% | N 22,74% |
| | gef. | C 68,48% | H 8,86% | N 22,32% |

IR (KBr): ν(C=O) 1710 $cm^{-1}$.

Beispiel 2: Synthese von mit Pyrazol blockiertem Methylendiphenyldiisocyanat

Die Reaktion wird wie in Beispiel 1 beschrieben durchgeführt. Eingesetzt werden 73,5 g (0,294 Mol) Methylendiphenyldiisocyanat (Isonate® M 125 [DOW]), 40 g (0,588 Mol) Pyrazol, 0,040 g Dibutylzinndilaurat und

insgesamt 400 ml Toluol. Nach dem Trocknen werden 110 g (97% Ausbeute) Produkt erhalten.
Schmelzpunkt: 201,5 °C (DSC)

| | | | | |
|---|---|---|---|---|
| Elementaranalyse: | ber. | C 65,27% | H 4,70% | N 21,75% |
| | gef. | C 65,48% | H 4,66% | N 21,55% |

IR (KBr): ν(C=O) 1712 $cm^{-1}$.

Beispiel 3: Synthese von mit Pyrazol blockiertem Isophorondiisocyanat

In einem 350 ml-Sulfierkolben mit Thermometer, Rückflusskühler, mechanischem Rührer und Inertgasanschluss werden 150 ml Toluol vorgelegt. Man gibt 20,0 g (0,294 Mol) Pyrazol und 0,200 g Dibutylzinndilaurat (DBTL-Katalysator) zu und rührt die Suspension 5 Minuten lang bei 25 °C. Anschliessend werden 32,7 g (0,147 Mol) Isophorondiisocyanat, gelöst in 50 ml Toluol, unter Stickstoffatmosphäre langsam zugetropft. wobei man die Temperatur unterhalb 30 °C hält. Es wird 2 Stunden lang unter Rückfluss erhitzt ( ca. 110 °C), wonach kein freies Isocyanat mehr nachweisbar ist. Man kühlt ab und verdampft das Lösungsmittel im Rotationsverdampfer. Nach Trocknung über Nacht bei 40 °C im Hochvakuum werden 53,7 g des Produktes in Form eines gelben Öls (ca. 100% Ausbeute) erhalten.

| | | | | |
|---|---|---|---|---|
| Elementaranalyse: | ber. | C 59,98% | H 7,83% | N 23,32% |
| | gef. | C 62,73% | H 7,50% | N 21,21% |

IR (KBr): ν(C=O) 1732 $cm^{-1}$.

Beispiel 4: Synthese von mit Pyrazol blockiertem Tri(1-isocyanatohexyl)isocyanurat

Die Reaktion wird wie in Beispiel 3 beschrieben durchgeführt. Eingesetzt werden 50,0 g (0,273 Mol NCO) technisches Tri(1-isocyanatohexyl)isocyanurat (Tolonate® HDT [Rhône Poulenc Chimie]), 18,6 g (0,273 Mol) Pyrazol, 0,050g Dibutylzinndilaurat und insgesamt 150 ml Toluol. Nach dem Trocknen (24h, 60 °C, Hochvakuum) werden 68,6 (ca. 100% Ausbeute) Produkt in Form eines orangen Öls erhalten.

| | | | | |
|---|---|---|---|---|
| Elementaranalyse: | ber. | C 55,92% | H 6,83% | N 23,71% |
| | gef. | C 58,57% | H 7,14% | N 21,33% |

Die Abweichungen sind auf die technische Qualität des eingesetzten Isocyanurats zurückzuführen.
IR (KBr): ν(C=O) 1725 $cm^{-1}$, ν(C=O, Isocyanurat) 1684 $cm^{-1}$.

Beispiel 5: Synthese von mit Pyrazol blockiertem Tri(1-isocyanatohexyl)biuret

Die Reaktion wird wie in Beispiel 3 beschrieben durchgeführt. Eingesetzt werden 50,0 g (0,25 Mol NCO) technisches Tri(1-isocyanatohexyl)biuret (Tolonate® HDB [Rhône Poulenc Chimie]), 17,02 g (0,25 Mol) Pyrazol, 0,050g Dibutylzinndilaurat und insgesamt 150 ml Toluol. Nach dem Trocknen werden 63,2 g (94% Ausbeute) Produkt erhalten.

| | | | | |
|---|---|---|---|---|
| Elementaranalyse: | ber. | C 56,89% | H 7,38% | N 24,62% |
| | gef. | C 59,89% | H 7,66% | N 21,05% |

Die Abweichungen sind auf die technische Qualität des eingesetzten Tri(1-isocyanatohexyl)biurets zurückzuführen.
IR (KBr): ν(C=O) 1722 $cm^{-1}$, ν(C=O, Biuret) 1690 $cm^{-1}$.

Beispiel 6:

Reaktion wie in Beispiel 1 beschrieben.

| | | | | | |
|---|---|---|---|---|---|
| Eingesetzt: | 20,7 g | Hexamethylendiisocyanat | | | |
| | 20,0 g | 3-Methylpyrazol | | | |
| | 0,02 g | DBTL | | | |
| Ausbeute: | ca. 100% | | | | |
| Smp. | 86 °C | | | | |
| Elementaranalyse: | ber. | C 57,81% | H 7,28% | N 25,28% | |
| | gef. | C 57,82% | H 7,28% | N 25,13% | |

IR (KBr): ν(C=O) 1718 $cm^{-1}$.

Beispiel 7:

Reaktion wie in Beispiel 1 beschrieben.

| | | | | | |
|---|---|---|---|---|---|
| Eingesetzt: | 28,9 g | Methylendiphenyldiisocyanat | | | |
| | 20,0 g | 3-Methylpyrazol | | | |
| | 0,02 g | DBTL | | | |
| Ausbeute: | 86% | | | | |
| Smp. | 171 °C | | | | |
| Elementaranalyse: | ber. | C 66,65% | H 5,35% | N 20,28% | |
| | gef. | C 66,71% | H 5,38% | N 20,17% | |

IR (KBr): ν(C=O) 1728 $cm^{-1}$.

Beispiel 8:

Reaktion wie in Beispiel 3 beschrieben.

| | | | | |
|---|---|---|---|---|
| Eingesetzt: | 27,6 g | Isophorondiisocyanat (Hüls, technische Qualität) | | |
| | 20,0 g | 3-Methylpyrazol | | |
| | 0,02 g | DBTL | | |
| Ausbeute: | ca. 100% | | | |
| Elementaranalyse: | ber. | C 62,15% | H 7,82% | N 21,74% |
| | gef. | C 65,62% | H 7,99% | N 18,71% |

IR (KBr): ν(C=O) 1728 $cm^{-1}$.

Beispiel 9:

Reaktion wie in Beispiel 1 beschrieben.

| | | | | | |
|---|---|---|---|---|---|
| Eingesetzt: | 17,5 g | Hexamethylendiisocyanat | | | |
| | 20,0 g | 3,5-Dimethylpyrazol | | | |
| | 0,02 g | DBTL | | | |
| Ausbeute: | 97% | | | | |
| Smp. | 95 °C | | | | |
| Elementaranalyse: | ber. | C 59,98% | H 7,83% | N 23,32% |
| | gef. | C 59,98% | H 7,93% | N 23,30% |

IR (KBr): ν(C=O) 1718 $cm^{-1}$.

Beispiel 10:

Reaktion wie in Beispiel 1 beschrieben

| | | | | | |
|---|---|---|---|---|---|
| Eingesetzt: | 26,0g | Methylendiphenyldiisocyanat | | | |
| | 20,0 g | 3,5-Dimethylpyrazol | | | |
| | 0,02 g | DBTL | | | |
| Ausbeute: | 90% | | | | |
| Smp. | 185 °C | | | | |
| Elementaranalyse: | ber. | C 67,86% | H 5,92% | N 18,99% |
| | gef. | C 68,06% | H 5,95% | N 18,86% |

IR (KBR): ν(C=O) 1722 $cm^{-1}$.

Beispiel 11:

Reaktion wie in Beispiel 3 beschrieben.

| | | | | | |
|---|---|---|---|---|---|
| Eingesetzt: | 23,1 g | Isophorondiisocyanat (Hüls, technische Qualität) | | | |
| | 20,0 g | 3,5-Dimethylpyrazol | | | |
| | 0,02 g | DBTL | | | |
| Ausbeute: | ca. 100% | | | | |
| Elementaranalyse: | ber. | C 63,46% | H 8,71% | N 20,17% |
| | gef. | C 66,30% | H 8,53% | N 19,35% |

IR (KBr): ν(C=O) 1724 $cm^{-1}$.

Beispiel 12:

4,0 g (13,4 mMol) des Produkts aus Beispiel 1 werden mit 4,1 g eines Polyoxypropylenpolyamins mit durchschnittlich 3 Aminogruppen im Molekül (Jeffamine® T 403) gemischt und zweimal über den Dreiwalzenstuhl gelassen. Die erhaltene weisse Mischung zeigt auch nach sechsmonatiger Lagerung bei 40 °C (sowohl in offenen als auch in geschlossenen Gefässen) keinen nennenswerten Viskositätsanstieg. Die Gelierzeiten betragen 42 min bei 100 °C, 7 min 30 s bei 120 °C, 2 min 50 s bei 140 °C und 40 s bei 160 °C. Dabei bildet die anfängliche weisse Suspension oberhalb einer Temperatur von 100 °C eine homogene Lösung. In der Differentialthermoanalyse zeigt die Zusammensetzung unterhalb 100 °C endothermes Verhalten (Maximum bei 80 °C), oberhalb 100 °C exothermes (Maximum bei 121 °C). Nach dreissigminütiger Härtung bei 120 °C beträgt die Zugscherfestigkeit (gemessen nach ISO 4587) 4 MPa (Al/Al).

Beispiel 13:

4,0 g (10,3 mMol) des Produkts aus Beispiel 2 werden mit 3,2 g Polyoxypropylenpolyamin (Jeffamine® T 403) gemischt und zweimal über den Dreiwalzenstuhl gelassen. Die erhaltene weisse Mischung zeigt nach dreimonatiger Lagerung bei 25 °C (sowohl in offenen als auch in geschlossenen Gefässen) keinen nennenswerten Viskositätsanstieg. Die Gelierzeiten betragen 6 min 20 s bei 100 °C, 3 min 50 s bei 120 °C, 2 min bei 140 °C und 1 min bei 160 °C. Die Differentialthermoanalyse zeigt nur einen exothermen Peak (bei 102 °C). Die Zugscherfestigkeit (gemessen nach ISO 4587) beträgt 12 MPa (Al/Al).

Beispiele 14 - 21:

Es werden Gemische aus einem blockierten Polyisocyanat und einem di- bzw. trifunktionellen Polyoxypropylenpolyamin, wie in Tabelle 1 angegeben, hergestellt und zweimal über den Dreiwalzenstuhl gelassen. Jeffamine® D 230 ist ein Polyoxypropylendiamin mit einem Molekulargewicht von ca. 230, Jeffamine®T 403 ein Polyoxypropylenamin mit durchschnittlich 3 Aminogruppen pro Molekül und einem Molekulargewicht von ca. 430. Es werden die jeweils in Tabelle 1 angegebenen Stabilitäten, Zugscherfestigkeiten (nach einer Härtung von 30 min bei 120 °C) und Gelierzeiten gemessen.

Tabelle 1:

| Beispiel | Isocyanat aus Beispiel (je 5 g) | Polyamin | Menge | Stabilität | Zugscherkraft[3] (Al/Al) | Gelierzeit[4] bei | | | |
|---|---|---|---|---|---|---|---|---|---|
| | | | | | | 100°C | 120°C | 140°C | 160°C |
| 14 | 3 | Jeffamine® T 403 | 4,3 g | ≥ 3 Mo[1]; R.T.[2] | 6,5 MPa | 18′ | 4′ | 1,5′ | 15″ |
| 15 | 4 | Jeffamine® D 230 | 2,6 g | ≥ 6 Mo; R.T. | 8,0 MPa | 30′ | 7′30″ | 2′ | 20″ |
| 16 | 5 | Jeffamine® D 230 | 2,7 g | ≥ 6 Mo; R.T. | 11,0 MPa | 15′ | 5′20″ | 2′ | 15″ |
| 17 | 6 | Jeffamine® T 403 | 4,6 g | ≥ 3 Mo; 40°C | 6,0 MPa | 18′ | 5′40″ | 1′ 42″ | 23″ |
| 18 | 7 | Jeffamine® T 403 | 3,7 g | ≥ 3 Mo; R.T. | 15,0 MPa | 3′ | 2′ | 1′ 43″ | 54″ |
| 19 | 9 | Jeffamine® T 403 | 4,28 g | ≥ 6 Mo; 40°C | 4,0 MPa | 3′ | 1′46″ | 23″ | 6″ |
| 20 | 10 | Jeffamine® T 403 | 3,5 g | ≥ 1 Mo; R.T. | 16,5 MPa | 33″ | 12″ | 6″ | 3″ |
| 21 | 11 | Jeffamine® T 403 | 3,7 g | ≥ 3 Mo; R.T. | 10,0 MPa | 3′42″ | 1′ 28″ | 33″ | 5″ |

[1] Monate
[2] Raumtemperatur
[3] nach ISO 4587
[4] ′ = min, ″ = s

Den vorstehenden Beispielen entsprechende Zusammensetzungen, bei denen anstatt einem Polyamin ein Polyol als Härter eingesetzt wird, weisen wesentlich längere Gelierzeiten auf und bieten unter gleichen Bedingungen nur eine erheblich niedrigere Zugscherfestigkeit.

Beispiel 22:

Mit 4-Benzyl-3,5-dimethylpyrazol blockiertes Methylendiphenyldiisocyanat wird mit einer äquimolaren Menge Jeffamine® T 403 gemischt und zweimal über den Dreiwalzenstuhl gelassen. Die erhaltene Mischung zeigt auch nach mehr als zweieinhalbmonatiger Lagerung praktisch keinen Viskositätsanstieg. Die Gelierzeiten betragen 17 min 27 s bei 100 °C, 4 min 41 s bei 120 °C, 1 min 16 s bei 140 °C und 37 s bei 160 °C. Nach einstündiger Härtung bei 120 °C beträgt die Zugscherfestigkeit nach ISO 4587 (Al/Al) 10,7 MPa. Gemische auf Basis der hier verwendeten Komponenten sind besonders zum Kleben von Metallen geeignet.

Beispiel 23:

Mit 3,5-Dimethylpyrazol blockiertes Methylendiphenyldiisocyanat wird mit einer äquimolaren Menge Jeffamine® T 403 und etwa 15 Gew.-%, bezogen auf die Gesamtmasse, Glycerin gemischt und über den Dreiwalzenstuhl gelassen. Die erhaltene Mischung zeigt auch nach mehr als zweimonatiger Lagerung praktisch keinen Viskositätsanstieg. Die Gelierzeiten betragen 3 min 39 s bei 100 °C, 1 min 14 s bei 120 °C, 37 s bei 140 °C und 12 s bei 160 °C. Nach einstündiger Härtung bei 120 °C beträgt die Zugscherfestigkeit nach ISO 4587 (Al/Al) 8 MPa.

Beispiel 24:

Eine warmhärtende Klebstoffzusammensetzung mit der folgenden Zusammensetzung wurde hergestellt und zweimal über den Dreiwalzenstuhl gelassen:

| | | |
|---|---|---|
| blockiertes Polyisocyanat aus Beispiel 9 | 23,8 | Gew.-% |
| Jeffamine® T 403 | 20,4 | Gew.-% |
| Actrel® 400 (Weichmacher auf Basis von Diarylalkanen) | 6,7 | Gew.-% |
| Schellflex® (Verdünnungsmittel auf Basis von Petrolöl) | 6,7 | Gew.-% |
| Wollastonit | 39,6 | Gew.-% |
| Graphit | 1 | Gew.-% |
| Aerosil® 380 | 1,4 | Gew.-% |
| Silan-A-1100® | 0,5 | Gew.-% |

Die folgende Tabelle zeigt die Zugscherfestigkeiten (nach ISO 4587), die nach einstündiger Härtung bei 100 °C bzw. 120 °C bei Verwendung unterschiedlicher Materialien gemessen werden.

| Material | Zugscherfestigkeit in MPa, Härtung bei 100 °C | Zugscherfestigkeit in MPa, Härtung bei 120 °C |
|---|---|---|
| ABS | 7,55 | 8,1 |
| PVC | 3,30 | 5,2 |
| PA | 1,76 | 2,6 |
| SMC | 6,16 | 7,55 |
| öliger Stahl | 3,06 | 3,05 |
| Al | 2,9 | 3,3 |
| Al, sandgestrahlt | 7,13 | ---- |

Beispiel 25:

Eine warmhärtende Klebstoffzusammensetzung mit der folgenden Zusammensetzung wurde hergestellt und zweimal über den Dreiwalzenstuhl gelassen:

| | | |
|---|---|---|
| blockiertes Polyisocyanat aus Beispiel 10 | 24,7 | Gew.-% |
| Jeffamine® T 403 | 17,3 | Gew.-% |
| Actrel® 400 (Weichmacher auf Basis von Diarylalkanen) | 6,9 | Gew.-% |
| Schellflex® (Verdünnungsmittel auf Basis von Petrolöl) | 6,9 | Gew.-% |
| Wollastonit | 41,2 | Gew.-% |
| Graphit | 1 | Gew.-% |
| Aerosil® 380 | 1,5 | Gew.-% |
| Silan-A-1100® | 0,5 | Gew.-% |

Die folgende Tabelle zeigt die Zugscherfestigkeiten (nach ISO 4587), die nach einstündiger Härtung bei 100 °C bzw. 120 °C bei Verwendung unterschiedlicher Materialien gemessen werden.

| Material | Zugscherfestigkeit in MPa, Härtung bei | |
|---|---|---|
| | 100 °C | 120 °C |
| ABS | 6,05 | 5,9 |
| PVC | 1,46 | 1,73 |
| PA | 1,70 | 1,46 |
| SMC | 11,73 | 10,6 |
| öliger Stahl | 14,40 | 14,96 |
| Al | 12,6 | 14,6 |
| Al sandgestrahlt | 15,76 | ---- |

Sowohl die in Beispiel 24 als auch in Beispiel 25 angegebenen Zugscherfestigkeiten übertreffen die, die entsprechende Zusammensetzungen mit Polyolen anstatt dem Polyamin zeigen.

Beispiel 26: Synthese von Indazol blockiertem Hexamethylendiisocyanat

Die Synthese erfolgt analog Beispiel 3. Es werden jedoch 4,0 g Indazol, 2,85 g Hexamethylendiisocyanat, 100 ml Toluol und kein DBTL-Katalysator eingesetzt. Ausbeute: 5,95 g (87% der Theorie); Schmelzpunkt: 152 - 154 °C.

| | | | | |
|---|---|---|---|---|
| Elementaranalyse: | ber. | C 65,33% | H 5,98% | N 20,78% |
| | gef. | C 65,54% | H 5,99% | N 20,62% |

IR (KBr): ν(C=O) 1710 $cm^{-1}$.

Beispiel 27:

5 g (entsprechend 24,72 mMol blockierte NCO-Gruppen) des Produktes aus Beispiel 26 werden mit 3,82 g Jeffamine®T 403 (entsprechend 24,72 mMol $NH_2$-Gruppen) gemischt und zweimal über den Dreiwalzenstuhl gelassen. Die erhaltene Zusammensetzung ist ohne Nachteile mehr als ein Jahr bei Raumtemperatur lagerfähig. Das DSC-Diagramm zeigt einen endothermen Peak (Maximum bei 134 °C) vor dem exothermen, der Härtungsreaktion entsprechenden Peak (Maximum bei 191 °C). Die Gelierzeiten betragen bei 140 °C 43 Minuten, bei 160 °C 14 Minuten und 10 Sekunden.

Beispiel 28: Synthese von Indazol blockiertem Methylendiphenyldiisocyanat

Die Synthese erfolgt analog Beispiel 1. Es werden jedoch 4,0 g Indazol, 4,23 g Isonate®M 125 [DOW], 100 ml Toluol und kein DBTL-Katalysator eingesetzt. Ausbeute: 6,9 g (83,9 % der Theorie); Schmelzpunkt: 183 - 185 °C.

| | | | | |
|---|---|---|---|---|
| Elementaranalyse: | ber. | C 71,59% | H 4,56% | N 17,27% |
| | gef. | C 71,70% | H 4,55% | N 17,27% |

IR (KBr): ν(C=O) 1720 $cm^{-1}$.

Beispiel 29:

5 g (entsprechend 20,6 mMol blockierte NCO-Gruppen) des Produktes aus Beispiel 28 werden mit 3,2 g Jeffamine® T 403 (entsprechend 20,6 mMol $NH_2$-Gruppen) gemischt und zweimal über den Dreiwalzenstuhl gelassen. Die erhaltene Zusammensetzung ist ohne Nachteile mehr als ein halbes Jahr bei Raumtemperatur lagerfähig. Das DSC-Diagramm zeigt einen endothermen Peak (Minimum bei 107 °C) vor dem exothermen, der Härtungsreaktion entsprechenden Peak (Maximum bei 147 °C). Die Gelierzeiten betragen bei 120 °C 19 Minuten, bei 140 °C 7,7 Minuten, bei 160 °C 2,2 Minuten. Als Zugscherfestigkeit (nach ISO 4587; Al/Al, 1Stunde bei 160 °C gehärtet) misst man 7,1 MPa.

Beispiel 30:

0,6 g (entsprechend 2 mMol blockierte NCO-Gruppen) mit 4-(4-Methoxybenzyl)3,5-dimethylpyrazol blokkiertes Hexamethylendiisocyanat (gelbes hochviskoses Öl der Elementaranalyse: 68,3% C [ber. 67,98%], 7,6% H [ber. 7,38%] und 12,8 % N [ber. 13,99%] werden mit 0,3 g Jeffamine® T 403 (entsprechend 2 mMol $NH_2$-Gruppen) gemischt und zweimal über den Dreiwalzenstuhl gelassen. Die erhaltene Zusammensetzung ist ohne Nachteile mehrere Monate bei Raumtemperatur lagerfähig. Das DSC-Diagramm zeigt einen endothermen Peak (Maximum bei 55 °C) vor dem exothermen, der Härtungsreaktion entsprechenden Peak (Maximum bei 115 °C). Die Gelierzeiten betragen bei 100 °C 24 Minuten und 53 Sekunden, bei 120 °C 5 Minuten und 44 Sekunden, bei 140 °C 3 Minuten und 14 Sekunden und bei 160 °C 1 Minute und 49 Sekunden.

Beispiel 31:

0,5 g (entsprechend 1,46 mMol blockierte NCO-Gruppen) mit 4-(4-Methoxybenzyl)3,5-dimethylpyrazol blockiertes Methylendiphenyldiisocyanat (farblose Festsubstanz der Elementaranalyse: 72,08 C [ber. 72,12%], 6,19% H [ber. 6,2%] und 12,11% N [ber. 12,31 %] werden mit 0,26 g Jeffamine®T 403 (entsprechend 1,46 mMol $NH_2$-Gruppen) gemischt und zweimal über den Dreiwalzenstuhl gelassen. Die erhaltene Zusammensetzung ist ohne Nachteile mehrere Monate bei Raumtemperatur lagerfähig. Das DSC-Diagramm zeigt einen endothermen Peak (Maximum bei 68 °C) vor dem exothermen, der Härtungsreaktion entsprechenden Peak (Maximum bei 108 °C). Die Gelierzeiten betragen bei 100 °C 2 Minuten und 20 Sekunden, bei 120 °C 18 Sekunden, bei 140 °C 6 Sekunden und bei 160 °C ca. 1 Sekunde.

Beispiel 32:

2,5 g (entsprechend 12,87 mMol blockierte NCO-Gruppen) mit 5-Ethyl-3-methylpyrazol blockiertes Hexamethylendiisocyanat (Schmelzpunkt: 76 °C, Elementaranalyse: 60,78% C [ber. 61,83%], 8,29% H [ber. 8,30%] und 21,54 % N [ber. 21,63%], IR (KBr): ν(C=O) 1712 $cm^{-1}$) werden mit 2 g Jeffamine®T 403 (entsprechend 12,87 mMol $NH_2$-Gruppen) gemischt und zweimal über den Dreiwalzenstuhl gelassen. Die erhaltene Zusammensetzung ist ohne Nachteile mehr als sechs Monate bei Raumtemperatur lagerfähig. Das DSC-Diagramm zeigt einen endothermen Peak (Maximum bei 60 °C) vor dem exothermen, der Härtungsreaktion entsprechenden Peak (Maximum bei 121 °C). Die Gelierzeiten betragen bei 100 °C 13 Minuten, bei 120 °C 1 Minute und 25 Sekunden, bei 140 °C 40 Sekunden und bei 160 °C 16 Sekunden.

## Patentansprüche

1. Warmhärtende Zusammensetzung, die mindestens ein blockiertes Polyisocyanat der Formeln I oder II

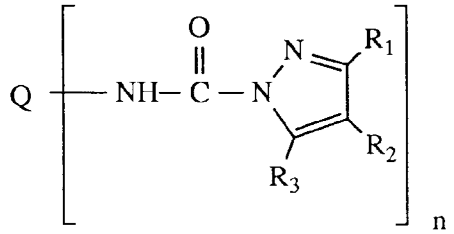 (I), 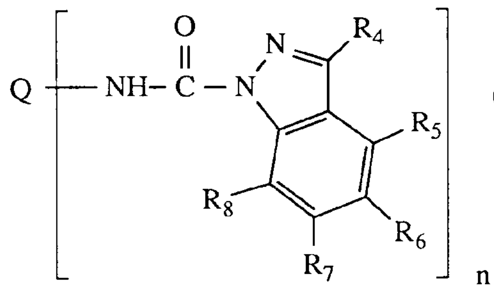 (II),

worin
n eine ganze Zahl ≧ 2 bedeutet,
Q einen n-wertigen organischen Rest bedeutet, und
$R_1$, $R_2$, $R_3$, $R_4$, $R_5$, $R_5$, $R_7$, $R_8$ unabhängig voneinander Wasserstoff, Alkyl-, Aryl-, Arylalkyl-, Alkyloxy-, Alkylthio oder Hydroxyl bedeuten, und
ein zur Vernetzung fähiges, bei Raumtemperatur flüssiges, primäres oder sekundäres Polyamin, enthält, wobei das blockierte Polyisocyanat in dem Polyamin bei Raumtemperatur oder mässig erhöhter Temperatur im wesentlichen nicht löslich ist.

2. Zusammensetzung nach Anspruch 1, die als Polyamin ein Polyoxyalkylenpolyamin enthält.

3. Zusammensetzung nach Anspruch 1 oder 2, bei der das blockierte Isocyanat in dem Polyamin bei einer Temperatur bis zu 50°C im wesentlichen nicht löslich ist.

4. Zusammensetzung nach zumindest einem der Ansprüche 1 bis 3, die zusätzlich ein Mittel enthält, das die Löslichkeit des blockierten Isocyanats herabsetzt.

5. Zusammensetzung nach Anspruch 4, die ein Mittel enthält, das die Polarität des Mediums, das das blokkierte Isocyanat umgibt, steigert.

6. Zusammensetzung nach Anspruch 5, bei der das Mittel eine Hydroxylgruppen aufweisende Verbindung ist.

7. Zusammensetzung nach Anspruch 6 bei der die Hydroxylgruppen aufweisende Verbindung Glycerin ist.

8. Zusammensetzung nach zumindest einem der Ansprüche 1 bis 7, die ein blockiertes Polyisocyanat enthält, bei dem Q in den Formeln I oder II ausgewählt ist aus den organischen Resten der Formeln III bis VII:

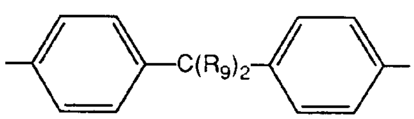 (III),

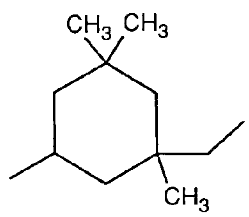 (IV),

$-(CH_2)_6-$ (V),

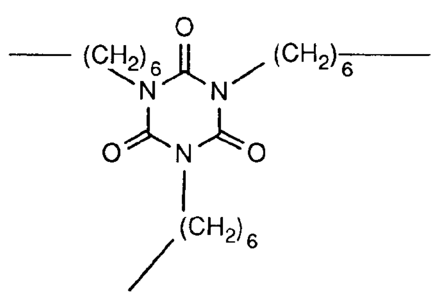 (VI),

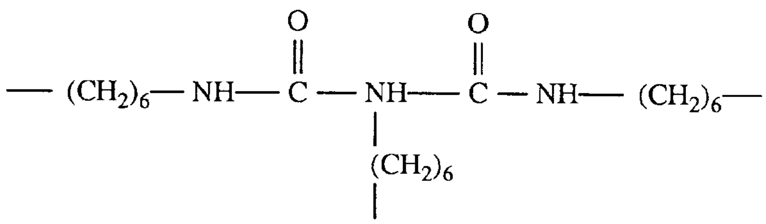
(VII),

wobei die $R_9$ in Formel III unabhängig voneinander Wasserstoff oder Alkyl mit 1 bis 4 Kohlenstoffatomen bedeuten.

**9.** Verwendung von zur Vernetzung fähigen, bei Raumtemperatur flüssigen, primären oder sekundären Polaminen als thermische Härter für blockierte Polyisocyanate der Formeln I oder II

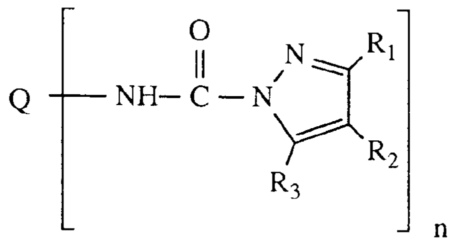
(I),
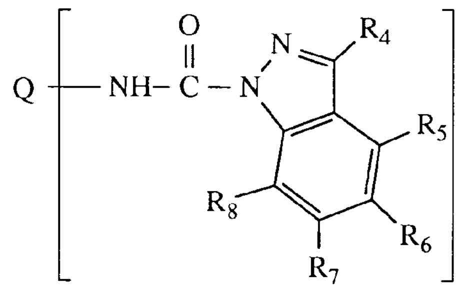
(II),

worin
n eine ganze Zah ≧ 2 bedeutet,
Q einen n-wertigen organischen Rest bedeutet, und
$R_1$, $R_2$, $R_3$, $R_4$, $R_5$, $R_5$, $R_7$, $R_8$ unabhängig voneinander Wasserstoff, Alkyl-, Aryl-, Arylalkyl-, Alkyloxy-, Alkylthio- oder Hydroxyl bedeuten,
unter der Vorraussetzung, dass sich die blockierten Polyisocyanate zumindest bei Raumtemperatur in den Polyaminen im wesentlichen nicht lösen.

**10.** Verwendung von mindestens einem blockierten Polyisocyanat der Formeln I oder II

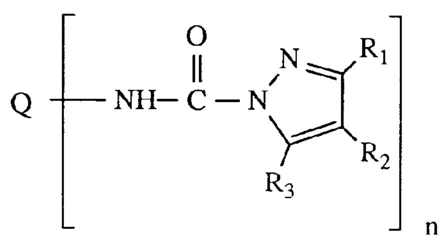
(I),
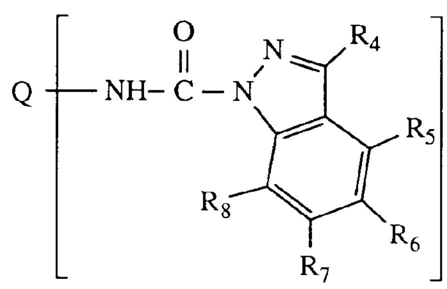
(II),

worin
n eine ganze Zahl ≧ 2 bedeutet,
Q einen n-wertigen organischen Rest bedeutet, und
$R_1$, $R_2$, $R_3$, $R_4$, $R_5$, $R_5$, $R_7$, $R_5$ unabhängig voneinander Wasserstoff, Alkyl-, Aryl-, Arylalkyl-, Alkyloxy- Alkylthio- oder Hydroxyl bedeuten,
zusammen mit mindestens einem zur Vernetzung von Polyisocyanaten fähigen, bei Raumtemperatur flüssigen, primären oder sekundären Polyamin, in dem das blockierte Polyisocyanat im wesentlichen nicht löslich ist, als Klebstoffsystem.

**11.** Verwendung nach Anspruch 10 als Einkomponentenklebstoff.

**12.** Verwendung nach einem der Ansprüche 10 oder 11 zum Verkleben lasttragender Teile.

**13.** Verwendung nach zumindest einem der Ansprüche 10 bis 12 zum Verkleben von Kunststoffen.

**14.** Verwendung nach zumindest einem der Ansprüche 10 bis 13 unter Einsatz eines blockierten Polyisocyanats der Formel I zum Verkleben von verunreinigtem Metall.

**15.** Verwendung nach Anspruch 14, bei der das verunreinigte Metall öliger oder nicht entölter Stahl ist.

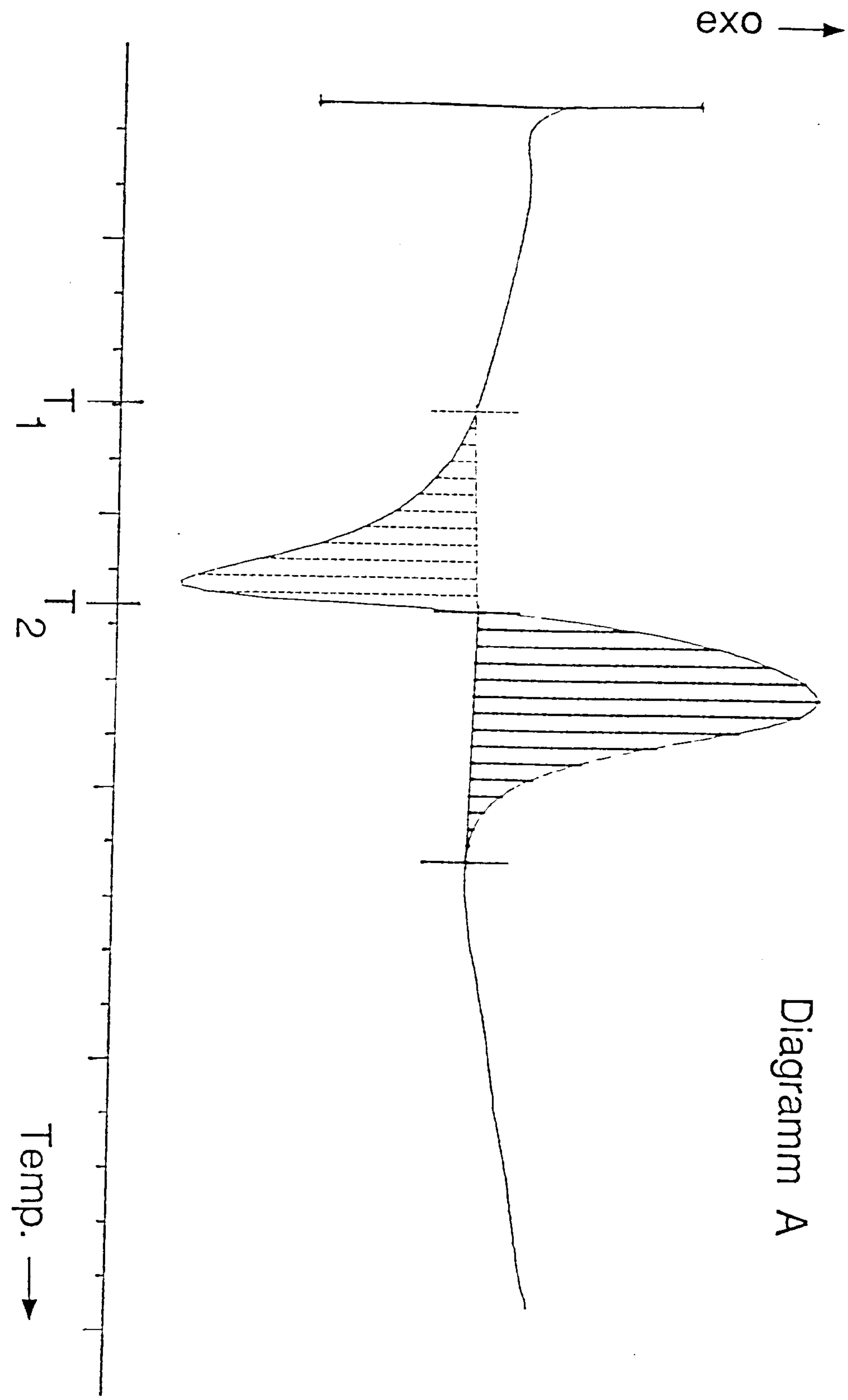


Fig. 1